(19) Europäisches Patentamt / European Patent Office / Office européen des brevets

(11) **EP 4 156 327 A1**

(12) # EUROPEAN PATENT APPLICATION
published in accordance with Art. 153(4) EPC

(43) Date of publication:
**29.03.2023 Bulletin 2023/13**

(21) Application number: **22811516.8**

(22) Date of filing: **06.05.2022**

(51) International Patent Classification (IPC):
$H01M\ 4/1391^{(2010.01)}$ $\quad H01M\ 4/36^{(2006.01)}$
$H01M\ 4/62^{(2006.01)}$ $\quad H01M\ 4/525^{(2010.01)}$
$H01M\ 4/505^{(2010.01)}$ $\quad H01M\ 10/052^{(2010.01)}$
$H01M\ 4/02^{(2006.01)}$

(52) Cooperative Patent Classification (CPC):
H01M 4/02; H01M 4/1391; H01M 4/36;
H01M 4/505; H01M 4/525; H01M 4/62;
H01M 10/052; Y02E 60/10

(86) International application number:
**PCT/KR2022/006453**

(87) International publication number:
**WO 2022/250323 (01.12.2022 Gazette 2022/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.05.2021 KR 20210067112**

(71) Applicant: **LG Energy Solution, Ltd.**
**Seoul 07335 (KR)**

(72) Inventors:
• **SUN, Kyung Eun**
  **Daejeon 34122 (KR)**
• **OH, Sang Seung**
  **Daejeon 34122 (KR)**
• **KIM, Hye Hyeon**
  **Daejeon 34122 (KR)**
• **JO, Chi Ho**
  **Daejeon 34122 (KR)**

(74) Representative: **Hoffmann Eitle**
**Patent- und Rechtsanwälte PartmbB**
**Arabellastraße 30**
**81925 München (DE)**

(54) **POSITIVE ELECTRODE SLURRY AND POSITIVE ELECTRODE FOR LITHIUM SECONDARY BATTERY USING SAME**

(57)   Provided is a positive electrode slurry for a positive electrode for a lithium secondary battery, which is manufactured using the same. The positive electrode slurry is composed of a two-liquid type composition, contains the positive electrode additive represented by Chemical Formula 1 ($Li_pCo_{(1-q)}M^1_qO_4$), which is used as an irreversible additive, in a large amount, and contains the first liquid whose viscosity is adjusted within a specific range (i.e. 5,000 to 8,000 cps). Thus, not only is there an advantage in that the dispersibility and workability of the positive electrode additive are excellent, but also since it is possible to suppress side reactions while minimizing the loss of the positive electrode additive contained in the positive electrode slurry, the state stability of the positive electrode slurry can be improved, and thus the electrical properties of the positive electrode manufactured using the positive electrode slurry are excellent.

EP 4 156 327 A1

**Description**

[Technical Field]

The present disclosure relates to a positive electrode slurry and a positive electrode for a lithium secondary battery, which is manufactured using the same.
This application claims the benefit of priority based on Korean Patent Application No. 10-2021-0067112, filed on May 25, 2021, and the entire contents of the Korean patent application are incorporated herein by reference.

[Background Art]

As technology development and demand for mobile devices increase, the demand for secondary batteries serving as energy sources is rapidly increasing. Among these secondary batteries, lithium secondary batteries having a high energy density and operating potential, a long cycle life, and a low self-discharge rate have been commercialized and widely used.
Recently, as the lithium secondary batteries are used as power sources for medium and large-sized devices such as electric vehicles, high capacity, high energy density, and low cost are further required in the lithium secondary batteries, and irreversible additives used in electrodes are also required to have a higher irreversible capacity.
In response to the above demands, conventional irreversible additives such as $Li_6CoO_4$ and the like have been developed. However, the irreversible additives are structurally unstable and can generate a large amount of oxygen gas ($O_2$) the secondary battery is charged, and thus the use of a large amount of an irreversible additive in positive electrodes has limitations in terms of charging and discharging efficiency and safety of lithium secondary batteries:

$$Li_6CoO_4 \longrightarrow Li_4CoO_4 \xrightarrow{O_2\,\text{Generation}} Li_1CoO_{2.5} \xrightarrow{O_2\,\text{Generation}} CoO_2$$

Accordingly, efforts have been made to reduce the irreversibility of lithium secondary batteries by using a small amount of irreversible additives. However, when the irreversible additives are used in small amounts, particularly, in a small amount of less than 5 wt% with respect to a total weight of a positive electrode slurry, there are problems in that since it is difficult to ensure dispersibility in the positive electrode slurry, the electrical properties of the lithium secondary battery deteriorate, and a loss amount of the irreversible additive is increased due to the scattering of the irreversible additive having a small particle size during a manufacturing process of a positive electrode, and thus a degree of freedom in process design is reduced.
Therefore, the development of technology is required in which, when an irreversible additive is used, the dispersibility of the irreversible additive in a positive electrode slurry is sufficient to ensure excellent electrical properties of a lithium secondary battery.

[Document of Related Art]

[Patent Document]

Korean Laid-open Patent Publication No. 10-2019-0064423

[Disclosure]

[Technical Problem]

An object of the present technology is to provide a positive electrode slurry containing a significantly small amount of the irreversible additive with a high degree of dispersion without loss of the irreversible additive when a positive electrode is manufactured, and a positive electrode for a lithium secondary battery, which is manufactured using the same.

[Technical Solution]

The present technology is directed to solving the above-described problem and provides a positive electrode slurry for a lithium secondary battery, including a mixture of a first liquid, which contains a first positive electrode active material, a positive electrode additive represented by Chemical Formula 1 below, and a conductive material and has a viscosity of 5,000 cps or more and less than 8,000 cps at 25±1 °C, and a second liquid containing a second positive electrode active material and a binder, wherein, when the first liquid and the second liquid are mixed, the positive electrode slurry has a viscosity of 8,000 cps or more and less than 10,000 cps at $25\pm1$ °C:

[Chemical Formula 1]        $Li_pCo_{(1-q)}M^1_qO_4$

wherein in Chemical Formula 1, $M^1$ denotes one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and p and q are $5\leq p\leq7$ and $0\leq q\leq0.5$, respectively.

The positive electrode slurry may have a viscosity of 8,500 to 9,700 cps at $25\pm1$ °C.

The positive electrode additive may have a tetragonal structure with a space group of $P4_2/nmc$.

The first liquid may contain 0.5 to 40 parts by weight of the positive electrode additive and 5 to 50 parts by weight of the conductive material with respect to 100 parts by weight of a total amount of the first liquid, and the second liquid may contain 1 to 15 parts by weight of the binder with respect to 100 parts by weight of a total amount of the second liquid.

The first positive electrode active material may be contained in an amount of 1 to 30 parts by weight with respect to 100 parts by weight of a total amount of the first and second positive electrode active materials contained in the positive electrode slurry.

Each of the first positive electrode active material and the second positive electrode active material may be a lithium metal composite oxide represented by Chemical Formula 2 below:

[Chemical Formula 2]        $Li_x[Ni_yCo_zMn_wM^2_v]O_u$

wherein in Chemical Formula 2, $M^2$ denotes one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and x, y, z, w, v, and u are $1.0\leq x\leq1.30$, $0\leq y<0.95$, $0<z\leq0.5$, $0<w\leq0.5$, $0\leq v\leq0.2$, and $1.5\leq u\leq4.5$, respectively.

The binder may have a weight-average molecular weight (Mw) of 10,000 to 1,000,000.

The conductive material may include one or more materials selected from the group consisting of natural graphite, artificial graphite, carbon black, carbon nanotubes, graphene, acetylene black, Ketjen black, and carbon fibers.

Each of the first liquid and the second liquid may include one or more polar aprotic solvents of N-methyl-2pyrrolidone (NMP), N,N-dimethyl acetamide (DMAc), dimethylformamide (DMF), dimethyl sulfoxide (DMSO), acetonitrile (ACN), acetone, ethyl acetate, and distilled water.

The present technology is directed to solving the above-described problem and provides a method of preparing a positive electrode slurry for a lithium secondary battery, including preparing a first liquid by mixing a first positive electrode active material, a positive electrode additive represented by Chemical Formula 1 below, and a conductive material, preparing a second liquid by mixing a second positive electrode active material and a binder, and preparing a positive electrode slurry by mixing the first liquid and the second liquid, wherein the first liquid has a viscosity of 5,000 cps or more and less than 8,000 cps at $25\pm1$ °C, wherein the positive electrode slurry has a viscosity of 8,000 cps or more and less than 10,000 cps at $25\pm1$ °C:

[Chemical Formula 1]        $Li_pCo_{(1-q)}M^1_qO_4$

wherein in Chemical Formula 1, $M^1$ denotes one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and p and q are $5\leq p\leq7$ and $0\leq q\leq0.5$, respectively. Here, the preparing of the first liquid may be performed at a temperature condition of 40 °C or lower.

[Advantageous Effects]

The positive electrode slurry for a lithium secondary battery according to the present disclosure is composed of a two-liquid type composition, contains the positive electrode additive represented by Chemical Formula 1, which is used as an irreversible additive, in the two-liquid type composition in a large amount, and contains a first liquid whose viscosity is adjusted within a specific range (i.e. 5,000-8,000 cps), and thus not only is there an advantage in that the dispersibility and workability of the positive electrode additive are excellent, but also since it is possible to suppress side reactions while minimizing the loss of the positive electrode additive contained in the positive electrode slurry, the state stability of the positive electrode slurry can be improved, and thus the electrical properties of the electrode manufactured using the positive electrode slurry are excellent.

[Detailed Description]

While the present invention may have various modifications and alternative forms, specific embodiments thereof will be described in detail.

However, it should be understood that there is no intent to limit the present invention to the particular forms disclosed, and on the contrary, the present invention is to cover all modifications, equivalents, and alternatives falling within the spirit and scope of the present invention.

It should be further understood that the terms "comprise," "comprising," "include," and/or "including," when used herein, specify the presence of stated features, integers, steps, operations, components, parts, or combinations thereof, but do not preclude the presence or addition of one or more other features, integers, steps, operations, components, parts, or combinations thereof.

In addition, when a layer, film, region, or plate is referred to as being "formed on" another layer, film, region, or plate, it includes a case in which the layer, film, region, or plate is formed directly on another layer, film, region, or plate and a case in which still another layer, film, region, or plate is interposed between the layer, film, region, or plate, and another layer, film, region, or plate. In contrast, when a layer, film, region, or plate is referred to as being "formed below" another layer, film, region, or plate, it includes a case in which the layer, film, region, or plate is formed directly below another layer, film, region, or plate, and a case in which still another layer, film, region, or plate is interposed between the layer, film, region, or plate and another layer, film, region, or plate. Further, in this specification, when a component is referred to as being disposed "on" another component, it includes a case in which a component is disposed above another component and a case in which a component is disposed below another component.

In addition, in the present invention, a "solid content" is a weight percentage of a solid material remaining after a solvent is removed from a first liquid, a second liquid, or a positive electrode slurry according to the present invention based on an original weight thereof. For example, when a weight of a solid material remaining after a solvent is removed from a 1 kg positive electrode slurry is 500 g, a solid content of the positive electrode slurry is 50%.

Further, in the present invention, "Ah" is a unit of capacity of a lithium secondary battery, is referred to as "ampere-hour," and is an amount of current per hour. For example, when a capacity of a battery is "3,000 mAh," it means that the battery can be discharged for one hour with a current of 3,000 mA.

Hereinafter, the present invention will be described in more detail.

**Positive electrode slurry for lithium secondary battery**

In an embodiment, the present disclosure provides a positive electrode slurry for a lithium secondary battery including a mixture of a first liquid, which contains a first positive electrode active material, a positive electrode additive represented by Chemical Formula 1 below, and a conductive material, and the first liquid has a viscosity of 5,000 cps or more and less than 8,000 cps at $25\pm1$ °C, and a second liquid containing a second positive electrode active material and a binder, wherein, when the first liquid and the second liquid are mixed, the positive electrode slurry has a viscosity of 8,000 cps or more and less than 10,000 cps at $25\pm1$ °C.

[Chemical Formula 1]  $\quad Li_p Co_{(1-q)} M^1_q O_4$

In Chemical Formula 1, $M^1$ denotes one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and p and q are $5\leq p\leq7$ and $0\leq q\leq0.5$, respectively.

The positive electrode slurry according to the present technology is a composition for manufacturing a positive electrode used in a lithium secondary battery, and contains a positive electrode active material, a positive electrode additive, a conductive material, and a binder that are required for manufacturing the positive electrode, wherein the respective components may be present separately from each other as a mixture of two types and then mixed. In this case, the mixture may be in the form of a mixed solution, dispersion, and/or solution.

Specifically, in the positive electrode slurry, the first liquid containing the first positive electrode active material, the positive electrode additive represented by Chemical Formula 1, and the conductive material, and the second liquid containing the second positive electrode active material and the binder may be present separately from each other, and the first liquid and the second liquid may be mixed and used. The positive electrode slurry includes the first liquid in which less than 5 wt% of the positive electrode additive and the conductive material are pre-dispersed in a solvent in large amounts together with some of the positive electrode active material, and thus it is possible to improve the dispersibility and workability of the positive electrode additive and it is also possible to improve the electrical properties and reliability of the manufactured positive electrode for a lithium secondary battery by minimizing a loss and side reaction of the positive electrode additive.

In this case, the first liquid may contain 0.5 to 40 parts by weight of the positive electrode additive and 5 to 50 parts by weight of the conductive material with respect to 100 parts by weight of the total amount of the first liquid. More specifically, the first liquid may contain 0.5 to 35 parts by weight, 0.5 to 25 parts by weight, 0.5 to 20 parts by weight, 0.5 to 15 parts by weight, 0.5 to 10 parts by weight, 0.5 to 5 parts by weight, 1 to 5 parts by weight, 1 to 15 parts by weight, 5 to 15 parts by weight, 0.5 to 5 parts by weight, 9 to 15 parts by weight, 11 to 15 parts by weight, 15 to 30 parts by weight, or 25 to 35 parts by weight of the positive electrode additive with respect to 100 parts by weight of the total amount of the first liquid. In this case, the amount of the positive electrode additive contained in the positive electrode slurry may be 5 parts by weight or less, more specifically, 0.01 to 5 parts by weight, 0.01 to 3 parts by weight, 0.01 to 2 parts by weight, 0.5 to 2 parts by weight, 1 to 2.5 parts by weight, or 0.05 to 0.9 parts by weight, with respect to 100 parts by weight of the total amount of the positive electrode slurry, specifically, with respect to 100 parts by weight of the total solid content contained in the positive electrode slurry.

In addition, the first liquid may contain 5 to 40 parts by weight, 5 to 30 parts by weight, 5 to 20 parts by weight, 5 to 10 parts by weight, 10 to 20 parts by weight, 15 to 30 parts by weight, or 20 to 30 parts by weight of the conductive material with respect to 100 parts by weight of the total amount of the first liquid.

Further, the second liquid may contain 1 to 10 parts by weight, 1 to 5 parts by weight, 2 to 6 parts by weight, 5 to 15 parts by weight, 5 to 10 parts by weight, 3 to 8 parts by weight, or 1 to 3 parts by weight of the binder with respect to 100 parts by weight of the total amount of the second liquid.

In addition, the first positive electrode active material contained in the first liquid may be contained in an amount of 1 to 30 parts by weight with respect to 100 parts by weight of the total amount of the positive electrode active materials, that is, the first positive electrode active material and the second positive electrode active material, contained in the positive electrode slurry. More specifically, the first positive electrode active material may be contained in an amount of 2 to 25 parts by weight, 2 to 20 parts by weight, 2 to 15 parts by weight, 2 to 10 parts by weight, 4 to 25 parts by weight, 5 to 20 parts by weight, 10 to 20 parts by weight, 3 to 8 parts by weight, 8 to 18 parts by weight, or 17 to 26 parts by weight with respect to 100 parts by weight of the total amount of the first and second positive electrode active materials.

According to the present technology, by controlling the amounts of the respective components contained in the first liquid and the second liquid within the above-described ranges, it is possible to prevent a small amount of the positive electrode additive from being lost in the form of dust when the positive electrode slurry is prepared and to prevent a side reaction with moisture and/or oxygen gas in the air from occurring, and it is also possible to uniformly disperse the positive electrode additive in the positive electrode slurry.

Meanwhile, the positive electrode additive may be a lithium cobalt oxide represented by Chemical Formula 1 below.

$$[\text{Chemical Formula 1}] \qquad Li_pCo_{(1-q)}M^1_qO_4$$

In Chemical Formula 1, $M^1$ denotes one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and p and q are $5 \leq p \leq 7$ and $0 \leq q \leq 0.5$, respectively.

The positive electrode additive may contain lithium in excess to provide lithium for lithium consumption caused by an irreversible chemical and physical reaction at a negative electrode during initial charging, and accordingly, the charging capacity of the battery may be increased and the irreversible capacity of the battery may be reduced, resulting in an improvement in lifetime characteristics of the battery.

Among positive electrode additives, the positive electrode additive represented by Chemical Formula 1 above has a higher amount of lithium ions than that of nickel-containing oxide commonly used in the art, and thus the lithium ions lost due to an irreversible reaction during initial activation of the battery may be replenished, thereby significantly improving the charge/discharge capacity of the battery. Further, in comparison to iron and/or manganese-containing oxides commonly used in the art, there is no side reaction that occurs due to the elution of transition metals during charging and discharging of the battery, and thus the battery has excellent stability. The lithium metal oxide represented by Chemical Formula 1 may include $Li_6CoO_4$, $Li_6Co_{0.5}Zn_{0.5}O_4$, $Li_6Co_{0.7}Zn_{0.3}O_4$, or the like.

Further, the positive electrode additive represented by Chemical Formula 1 may have a tetragonal crystal structure, and may be included in a space group of $P4_2/nmc$ having a twisted tetrahedral structure formed by a cobalt element and an oxygen element among the tetragonal crystal structures. Since the positive electrode additive has the twisted tetrahedral structure formed by the cobalt element and the oxygen element, the positive electrode additive may be structurally unstable, causing a side reaction with moisture or oxygen in the air at a temperature condition exceeding 40 °C. However, the present technology has an advantage in that, when the positive electrode slurry is prepared using the positive electrode additive, the first liquid in which some of the positive electrode active materials and the positive electrode additive are pre-dispersed is used and thus the positive electrode additive may be prevented from causing the side reaction with moisture or oxygen in the air.

In addition, as the first positive electrode active material and the second positive electrode active material that are respectively contained in the first liquid and the second liquid are positive electrode active materials capable of reversible intercalation and deintercalation, each may include a lithium metal composite oxide represented by Chemical Formula 2 below as a main component, and furthermore the lithium metal composite oxides used as the first positive electrode active material and the second positive electrode active material may be the same or different.

[Chemical Formula 2]     $Li_x[Ni_yCo_zMn_wM^2_v]O_u$

In Chemical Formula 2, $M^2$ denotes one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and x, y, z, w, v, and u are $1.0 \leq x \leq 1.30$, $0 \leq y < 0.95$, $0 < z \leq 0.5$, $0 < w \leq 0.5$, $0 \leq v \leq 0.2$, and $1.5 \leq u \leq 4.5$, respectively.

The lithium metal composite oxide represented by Chemical Formula 2 is a composite metal oxide containing lithium and nickel, and may include one or more compounds selected from the group consisting of $LiCoO_2$, $LiCo_{0.5}Zn_{0.5}O_2$, $LiCo_{0.7}Zn_{0.3}O_2$, $LiNiO_2$, $LiNi_{0.5}Co_{0.5}O_2$, $LiNi_{0.6}Co_{0.4}O_2$, $LiNi_{1/3}Co_{1/3}Al_{1/3}O_2$, $LiMnO_2$, $LiNi_{1/3}Co_{1/3}Mn_{1/3}O_2$, $LiNi_{0.8}Co_{0.1}Mn_{0.1}O_2$, $LiNi_{0.6}Co_{0.2}Mn_{0.2}O_2$, $LiNi_{0.9}Co_{0.05}Mn_{0.05}O_2$, $LiNi_{0.6}Co_{0.2}Mn_{0.1}Al_{0.1}O_2$, and $LiNi_{0.7}Co_{0.1}Mn_{0.1}Al_{0.1}O_2$.

As an example, in the positive electrode active material, $LiNi_{1/3}Co_{1/3}Mn_{1/3}O_2$, $LiNi_{0.8}Co_{0.1}Mn_{0.1}O_2$, $LiNi_{0.6}Co_{0.2}Mn_{0.2}O_2$, $LiNi_{0.8}Co_{0.1}Mn_{0.05}Al_{0.05}O_2$, or $LiNi_{0.6}Co_{0.2}Mn_{0.15}Al_{0.05}O_2$ may be used alone or in combination as the lithium metal composite oxide represented by Chemical Formula 2.

Further, the amount of the positive electrode active material may range from 85 to 95 parts by weight with respect to 100 parts by weight of a positive electrode mixture layer, specifically, 88 to 95 parts by weight, 90 to 95 parts by weight, 86 to 90 parts by weight, or 92 to 95 parts by weight.

In addition, the conductive material contained in the first liquid is used to improve electrical performance of the positive electrode, and those commonly used in the art may be applied, and specifically, one or more carbon-based materials selected from the group consisting of natural graphite, artificial graphite, carbon nanotubes, graphene, carbon black, acetylene black, Ketjen black, and carbon fibers may be used as the conductive material. For example, the conductive material may be included in the form in which acetylene black and carbon nanotubes are mixed.

Further, the conductive material may be contained in an amount of 1 to 5 parts by weight with respect to 100 parts by weight of a mixture layer, and specifically, may be contained in an amount of 1 to 4 parts by weight, 2 to 4 parts by weight, 1.5 to 5 parts by weight, or 1 to 3 parts by weight.

In addition, the binder serves to bind the positive electrode active material, the positive electrode additive, and the conductive material to each other, and any binder having such a function may be used without being particularly limited. Specifically, the binder may include one or more resins selected from the group consisting of a polyvinylidene fluoride-hexafluoropropylene copolymer (PVdF-co-HFP), polyvinylidene fluoride (PVdF), polyacrylonitrile, polymethylmethacrylate, and copolymers thereof. As an example, the binder may include polyvinylidene fluoride.

In addition, the weight-average molecular weight (Mw) of the binder may range from 10,000 to 1,000,000, and specifically, may range from 100,000 to 500,000, 500,000 to 1,000,000, 300,000 to 700,000, or 400,000 to 600,000. In the present technology, by controlling the weight-average molecular weight (Mw) of the binder within the above range, the viscosities of the first liquid and the positive electrode slurry can be easily controlled.

Further, each of the first liquid and the second liquid may further contain a solvent. As the solvent, each of the first liquid and the second liquid may contain, for example, one or more polar aprotic solvents selected from the group consisting of N-methyl-2pyrrolidone (NMP), N,N-dimethyl acetamide (DMAc), dimethylformamide (DMF), dimethyl sulfoxide (DMSO), acetonitrile (ACN), acetone, ethyl acetate, and distilled water, and furthermore the solvent of the first liquid and the solvent of the second liquid may be the same or different from each other. As an example, each of the first liquid and the second liquid may contain NMP as the solvent. In the present technology, by containing the above-described solvents in the first liquid and the second liquid, it is possible to easily control the viscosities of the first liquid and the second liquid and appropriately control the volatilization rate of the solvent so that cracks do not occur in the mixture layer due to rapid volatilization of the solvent when the positive electrode is manufactured.

Furthermore, the viscosities of the first liquid and the positive electrode slurry of the present technology may be adjusted within certain ranges. Specifically, the first liquid may have a viscosity of 5,000 cps or more and less than 8,000 cps at $25 \pm 1$ °C. For example, the first liquid may have a viscosity of 5,500 cps or more and less than 8,000 cps, 6,000 cps or more and less than 8,000 cps, 6,500 cps or more and less than 8,000 cps, 7,000 cps or more and less than 8,000 cps, 5,000 cps or more and less than 7,500 cps, 5,000 cps or more and less than 7,000 cps, 5,000 cps or more and less than 6,500 cps, 6,000 cps or more and less than 7,500 cps, or 6,500 cps or more and less than 7,500 cps at $25 \pm 1$ °C. Further, the positive electrode slurry may have a viscosity of 8,000 cps or more and less than 9,000 cps, 8,000 cps or more and less than 8,500 cps, 8,500 cps or more and less than 10,000 cps, 9,000 cps or more and less than 10,000 cps, 8,500 cps or more and less than 9,700 cps, 8,500 cps or more and less than 9,500 cps, or 9,000 cps or more and less than 9,800 cps at $25 \pm 1$ °C.

In the present technology, by controlling the viscosities of the first liquid and the positive electrode slurry within the above ranges, a small amount of the positive electrode additive may be more uniformly dispersed in the positive electrode slurry, the slurry can be uniformly applied and dried on a positive electrode current collector when the positive electrode is manufactured, and electrical performance can be improved by lowering the electrode resistance of the manufactured battery. In addition, it is possible to prevent the positive electrode mixture layer from being non-uniformly formed or an adhesive force between the positive electrode mixture layer and the current collector from being reduced during the manufacturing of the positive electrode, which may occur if the viscosities of the first liquid and/or the positive electrode slurry are too low.

**Method of preparing positive electrode slurry for lithium secondary battery**

Further, in an embodiment, the present disclosure provides a method of preparing the above-described positive electrode slurry for a lithium secondary battery.

The method of preparing the positive electrode slurry according to the present technology is performed by preparing and mixing a first liquid containing a first positive electrode active material, a positive electrode additive, and a conductive material, and a second liquid containing a second positive electrode active material and a binder. Specifically, the method of preparing the positive electrode slurry includes preparing the first liquid by mixing the first positive electrode active material, the positive electrode additive represented by Chemical Formula 1 below, and the conductive material, preparing the second liquid by mixing the second positive electrode active material and the binder, and preparing the positive electrode slurry by mixing the first liquid and the second liquid.

$$[\text{Chemical Formula 1}] \qquad Li_pCo_{(1-q)}M^1_qO_4$$

In Chemical Formula 1, $M^1$ denotes one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and p and q are $5 \leq p \leq 7$ and $0 \leq q \leq 0.5$, respectively.

Here, the preparing of the first liquid and the preparing of the second liquid include preparing the first liquid by mixing the first positive electrode active material, the positive electrode additive, and the conductive material, and preparing the second liquid by mixing the second positive electrode active material and the binder, respectively, and may be performed under the conventional conditions used in the preparation of a slurry in the art. For example, each of the preparing of the first liquid and the preparing of the second liquid may be performed by adding each component to a homo mixer and stirring the liquid in the homo mixer at 1,000 to 5,000 rpm for 30 to 600 minutes, and a viscosity of the liquid at $25 \pm 1$ °C may be controlled while adding a solvent thereto during stirring. As an example, in the case of the preparing of the first liquid, the first positive electrode active material, the positive electrode additive represented by Chemical Formula 1, and the conductive material may be added to the homo mixer, and an N-methylpyrrolidone solvent may be added to the homo mixer while mixing the above added components at 3,000 rpm for 60 minutes to prepare a first liquid having a viscosity of $7,500 \pm 300$ cps at $25 \pm 1$ °C.

Further, the preparing of the first liquid may be performed at a temperature condition satisfying a specific range in order to prevent the structurally unstable positive electrode additive from being damaged. Specifically, the preparing of the first liquid may be performed at a temperature condition of 40 °C or lower, and more specifically, may be performed at a temperature condition of 10 °C to 40 °C, 10 °C to 35 °C, 10 °C to 30 °C, 10 °C to 25 °C, 10 °C to 20 °C, 15 °C to 40 °C, 20 °C to 40 °C, 15 °C to 35 °C, or 18 °C to 30 °C.

In addition, the first liquid prepared in this way may satisfy a certain viscosity range, specifically, a viscosity of 5,000 cps or more and less than 8,000 cps at $25 \pm 1$ °C, and in this case, the viscosity may be adjusted according to a type and/or amount of the positive electrode additive contained in the first liquid, a solid content, a type of the solvent, etc., but the present technology is not limited thereto. For example, the first liquid may have a viscosity of 5,500 cps or more and less than 8,000 cps, 6,000 cps or more and less than 8,000 cps, 6,500 cps or more and less than 8,000 cps, 7,000 cps or more and less than 8,000 cps, 5,000 cps or more and less than 7,500 cps, 5,000 cps or more and less than 7,000 cps, 5,000 cps or more and less than 6,500 cps, 6,000 cps or more and less than 7,500 cps, or 6,500 cps or more and less than 7,500 cps at $25 \pm 1$ °C.

Further, the preparing of the positive electrode slurry is an operation of preparing the positive electrode slurry by mixing the previously prepared first liquid and second liquid, and in this case, the mixing may be performed by a method commonly applied in the art without being particularly limited, and specifically, the mixing may be performed by adding any one composition of the first liquid and the second liquid to the other composition. In some cases, the mixing may be performed while simultaneously adding the first liquid and the second liquid to a mixer, a reactor, or the like.

In addition, the positive electrode slurry prepared in this way may have a higher viscosity than the first liquid. Specifically, the positive electrode slurry may have a viscosity of 8,000 cps or more and less than 10,000 cps at $25 \pm 1$ °C. For example, the positive electrode slurry may have a viscosity of 8,000 cps or more and less than 9,000 cps, 8,000 cps or more and less than 8,500 cps, 8,500 cps or more and less than 10,000 cps, 9,000 cps or more and less than 10,000 cps, 8,500 cps or more and less than 9,700 cps, 8,500 cps or more and less than 9,500 cps, or 9,000 cps or more and less than 9,800 cps at $25 \pm 1$ °C.

In the present technology, by controlling the viscosities of the first liquid and the positive electrode slurry within the above-described ranges when the positive electrode slurry is prepared, a small amount of the positive electrode additive may be more uniformly dispersed in the positive electrode slurry, the slurry can be uniformly applied and dried on a positive electrode current collector during manufacturing of the positive electrode, and electrical performance can be improved by lowering the electrode resistance of the manufactured battery. In addition, it is possible to prevent the positive electrode mixture layer from being non-uniformly formed during the manufacturing of the positive electrode or an adhesive force between the positive electrode mixture layer and the current collector from being reduced during the manufacturing of the positive electrode, which may occur if the viscosities of the first liquid and/or the positive electrode slurry are too low.

**Positive electrode for lithium secondary battery**

In addition, in an embodiment, the present disclosure provides a positive electrode for a lithium secondary battery, including a positive electrode current collector and a positive electrode mixture layer that is manufactured using the positive electrode slurry of the present technology described above.

The positive electrode for a lithium secondary battery according to the present technology includes the positive electrode mixture layer that is manufactured by applying, drying, and pressing the positive electrode slurry of the present technology on the positive electrode current collector, and the positive electrode mixture layer has a configuration containing a positive electrode active material, a positive electrode additive represented by Chemical Formula 1, a conductive material, and a binder.

In this case, an average thickness of the positive electrode mixture layer is not particularly limited, but specifically, may range from 50 $\mu$m to 300 $\mu$m, and more specifically, may range from 100 $\mu$m to 200 $\mu$m, 80 $\mu$m to 150 $\mu$m, 120 $\mu$m to 170 $\mu$m, 150 $\mu$m to 300 $\mu$m, 200 $\mu$m to 300 $\mu$m, or 150 $\mu$m to 190 $\mu$m.

Further, as the positive electrode current collector of the positive electrode, a material having high conductivity without causing a chemical change in the battery may be used. For example, stainless steel, aluminum, nickel, titanium, calcined carbon, or the like may be used, and when aluminum or stainless steel is used, one whose surface is treated with carbon, nickel, titanium, the silver, or the like may be used. Further, the positive electrode current collector may have fine irregularities formed on a surface thereof to increase an adhesive force of the positive electrode active material and may be formed in various forms such as a film, a sheet, a foil, a net, a porous body, a foam body, a nonwoven body, and the like. In addition, an average thickness of the positive electrode current collector may be appropriately applied in a range of 3 to 500 $\mu$m in consideration of the conductivity and total thickness of the positive electrode to be manufactured.

**Lithium secondary battery**

Furthermore, in an embodiment, the present disclosure provides a lithium secondary battery including the positive electrode according to the present technology described above, a negative electrode, and a separator interposed between the positive electrode and the negative electrode.

The lithium secondary battery according to the present technology may include the positive electrode of the present technology described above to induce delithiation of the positive electrode additive at a high rate under a condition of a low voltage less than or equal to an allowable voltage during initial charging, and thus an amount of oxygen gas generated during subsequent charging and discharging is significantly small, and accordingly, there is an advantage in that electrical performance and safety of the lithium secondary battery are excellent.

The lithium secondary battery of the present technology has a structure including a positive electrode, a negative electrode, and a separator interposed between the positive electrode and the negative electrode.

Here, the negative electrode may be manufactured by applying, drying, and pressing a negative electrode active material on a negative electrode current collector, and may optionally further include the same conductive material as in the positive electrode, an organic binder polymer, an additive, and the like as necessary.

Further, the negative electrode active material may include graphite having a completely layered crystal structure such as natural graphite, soft carbon having a low crystallinity layered crystal structure (graphene structure; a structure in which hexagonal honeycomb planes of carbon are arranged in layers) and graphite materials such as hard carbon, artificial graphite, expanded graphite, carbon fibers, non-graphitizable carbon, carbon black, carbon nanotubes, fullerenes, activated carbon, and the like, in which carbon and these structures are mixed with amorphous parts, metal complex oxides such as $Li_xFe_2O_3$(0≤x≤1), $Li_xWO_2$(0≤x≤1), $Sn_xMe_{1-x}Me'_yO_z$ (Me: Mn, Fe, Pb, Ge; Me', Al, B, P, Si, Group 1, Group 2, and Group 3 elements of the periodic table, halogens; 0<x≤1; 1≤y<3; and 1≤z≤8), and the like, lithium metal, lithium alloys, silicon-based alloys, tin-based alloys, metal oxides such as SnO, $SnO_2$, PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$, $Bi_2O_5$, and the like, conductive polymers such as polyacetylene and the like, Li-Co-Ni-based materials, titanium oxide, lithium titanium oxide, and the like.

As an example, the negative electrode active material may include both graphite and silicon (Si)-containing particles, the graphite may include any one or more of natural graphite having a layered crystal structure and artificial graphite having an isotropic structure, and the silicon (Si)-containing particles may include silicon (Si) particles, silicon oxide ($SiO_2$) particles, or a mixture of the silicon (Si) particles and the silicon oxide ($SiO_2$) particles as particles including silicon (Si) serving as a metal component as a main component.

In this case, the negative electrode active material may include 80 to 95 parts by weight of graphite and 1 to 20 parts by weight of silicon (Si)-containing particles with respect to 100 parts by weight of the total amount of the negative electrode active material. In the present technology, by adjusting the amounts of graphite and silicon (Si)-containing particles contained in the negative electrode active material within the above ranges, the charging capacity per unit mass can be improved while reducing both lithium consumption and irreversible capacity loss during initial charging and discharging of the battery.

In addition, a negative electrode mixture layer may further include a binder to adhere the negative electrode active material onto a negative electrode current collector. For example, the negative electrode mixture layer may include any one of or a mixture of two or more of PVdF, polyacrylic acid (PAA), polymethacrylic acid (PMMA), styrene-butadiene rubber (SBR), carboxymethyl cellulose (CMC), and the like as the binder.

In this case, an amount of the binder may range from 0.5 to 5 parts by weight with respect to 100 parts by weight of the negative electrode mixture layer, specifically, 0.5 to 4 parts by weight or 1 to 3 parts by weight.

Further, the negative electrode mixture layer may have an average thickness of 100 $\mu$m to 200 $\mu$m, and specifically, may have an average thickness of 100 $\mu$m to 180 $\mu$m, 100 $\mu$m to 150 $\mu$m, 120 $\mu$m to 200 $\mu$m, 140 $\mu$m to 200 $\mu$m, or 140 $\mu$m to 160 $\mu$m.

In addition, the negative electrode current collector is not particularly limited to any current collector as long as it has high conductivity without causing a chemical change in the battery, and for example, a copper, stainless steel, nickel, titanium, calcined carbon, or the like may be used in the negative electrode current collector, and when copper or stainless steel is used, one whose surface is treated with carbon, nickel, titanium, silver, or the like may be used. Further, the negative electrode current collector, like the positive electrode current collector, may have fine irregularities formed on a surface thereof to strengthen a bonding force with the negative electrode active material, and may be formed in various forms such as a film, a sheet, a foil, a net, a porous body, a foam body, a nonwoven body, and the like. In addition, an average thickness of the negative electrode current collector may be appropriately applied in a range of 3 to 500 $\mu$m in consideration of the conductivity and total thickness of a negative electrode to be manufactured.

Further, the separator is interposed between the positive electrode and the negative electrode, and an insulating thin film having high ion permeability and mechanical strength is used as the separator. Although the separator is not particularly limited as long as it is commonly used in the art, specifically, a sheet or non-woven fabric made of chemical-resistant and hydrophobic polypropylene, glass fiber, polyethylene, or the like may be used, and in some cases, a composite separator in which a porous polymer substrate such as a sheet or nonwoven fabric is coated with inorganic particles/organic particles by an organic binder polymer may be used. When a solid electrolyte such as a polymer or the like is used as an electrolyte, the solid electrolyte may also serve as a separator. In addition, pores of the separator may have an average diameter of 0.01 to 10 $\mu$m and an average thickness of 5 to 300 $\mu$m.

Meanwhile, the positive electrode and the negative electrode may be wound in the form of a jelly roll, and may be accommodated in a cylindrical battery, a prismatic battery, or a pouch-type battery or accommodated in a pouch-type battery in a folding or stack-and-folding form, but the present technology is not limited thereto.

Further, a lithium salt-containing electrolyte according to the present technology may consist of an electrolyte and a lithium salt, and examples of the lithium salt-containing electrolyte may include a non-aqueous organic solvent, an organic solid electrolyte, an inorganic solid electrolyte, and the like.

Examples of the non-aqueous organic solvent may include an aprotic organic solvent such as N-methyl-2-pyrrolidinone, ethylene carbonate (EC), propylene carbonate, butylene carbonate, dimethyl carbonate (DMC), diethyl carbonate (DEC), gamma-butyrolactone, 1,2-dimethoxyethane, tetrahydroxy franc, 2-methyl tetrahydrofuran, DMSO, 1,3-dioxolane, formamide, DMF, dioxolane, ACN, nitromethane, methyl formate, methyl acetate, phosphoric acid triester, trimethoxymethane, a dioxolane derivative, sulfolane, methyl sulfolane, 1,3-dimethyl-2-imidazolidinone, a propylene carbonate derivative, a tetrahydrofuran derivative, ether, methyl propionate, ethyl propionate, etc.

Examples of the organic solid electrolyte may include polyethylene derivatives, polyethylene oxide derivatives, polypropylene oxide derivatives, phosphoric acid ester polymers, poly agitation lysine, polyester sulfide, polyvinyl alcohol, polyvinylidene fluoride, polymeric materials containing ionic dissociation groups, etc.

Examples of the inorganic solid electrolyte may include nitrides, halides, sulfates, etc. of Li such as $Li_3N$, LiI, $Li_5Ni_2$, $Li_3N$-LiI-LiOH, $LiSiO_4$, $LiSiO_4$-LiI-LiOH, $Li_2SiS_3$, $Li_4SiO_4$, $Li_4SiO_4$-LiI-LiOH, $Li_3PO_4$-$Li_2S$-$SiS_2$, etc.

The lithium salt is a material that is easily soluble in a non-aqueous electrolyte, and examples of the lithium salt may include LiCl, LiBr, LiI, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $(CF_3SO_2)_2NLi$, chloroborane lithium, lithium lower aliphatic carboxylates, lithium 4-phenylboronate, imide, etc.

Further, for the purpose of improving charging and discharging characteristics, flame retardancy, etc., for example, pyridine, triethylphosphite, triethanolamine, cyclic ether, ethylene diamine, n-glyme, hexaphosphoric acid triamide, nitrobenzene derivatives, sulfur, quinone imine dyes, N-substituted oxazolidinone, N,N-substituted imidazolidine, ethylene glycol dialkyl ether, ammonium salts, pyrrole, 2-methoxy ethanol, aluminum trichloride, etc. may be added to the electrolyte. In some cases, in order to impart incombustibility, a halogen-containing solvent such as carbon tetrachloride, ethylene trifluoride, etc. may be further included, and in order to improve high-temperature storage characteristics, carbon dioxide gas may be further included and fluoroethylene carbonate (FEC), propene sultone (PRS), etc. may be further included.

Hereinafter, the present disclosure will be described in more detail with reference to examples and comparative examples.

However, the examples and comparative examples described below are merely intended to illustrate the present technology, and the content of the present technology is not limited to the examples and comparative examples described below.

**Examples 1 to 4 and Comparative Example 1 to 8. Preparation of positive electrode slurries**

$LiNi_{0.6}Co_{0.2}Mn_{0.2}O_2$ as a first positive electrode active material, $Li_6Co_{0.7}Zn_{0.3}O_4$ as a positive electrode additive, and acetylene black and carbon nanotubes (with a weight ratio of 93 to 97:3 to 7) as conductive materials were each prepared, weighed as shown in Tables 1 and 2 below, and added to a homo mixer, and then an N-methylpyrrolidone solvent was introduced into the homo mixer and mixed at 3,000 rpm for 60 minutes to prepare a first liquid.

Separately, $LiNi_{0.6}Co_{0.2}Mn_{0.2}O_2$ as a second positive electrode active material and PVdF (weight-average molecular weight Mw: 500,000±25,000) as a binder were each prepared, weighed as shown in Tables 1 and 2 below, and added to a homo mixer, and then an N-methylpyrrolidone solvent was introduced into the homo mixer and mixed at 3,000 rpm for 90 to prepare a second liquid.

When the second liquid was prepared, the previously prepared first liquid was added to the homo mixer and further mixed for 30 minutes to prepare a positive electrode slurry. In this case, viscosities of the first liquid and the positive electrode slurry at 25 °C were adjusted as shown in Tables 1 and 2.

[Table 1]

| Units: parts by weight | | Example 1 | Example 2 | Example 3 | Example 4 |
|---|---|---|---|---|---|
| First liquid | First positive electrode active material | 4.8 | 19.18 | 4.65 | 18.6 |
| | Positive electrode additive | 0.1 | 0.1 | 3 | 3 |
| | Conductive material | 2 | 2 | 2 | 2 |
| | Total amount | 6.9 | 21.28 | 9.65 | 23.6 |
| | Viscosity [cps] | 7,000 | 7,000 | 7,000 | 7,000 |
| Second liquid | Second positive electrode active material | 91.1 | 76.72 | 88.35 | 74.4 |
| | Binder | 2 | 2 | 2 | 2 |
| | Total amount | 93.1 | 78.72 | 90.35 | 76.4 |
| Viscosity [cps] of positive electrode slurry | | 9,500 | 9,500 | 9,500 | 9,500 |

[Table 2]

| Units: parts by weight | | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|
| First liquid | First positive electrode active material | 4.8 | 19.19 | 4.45 | 17.8 | 0.93 | 46.5 | 4.65 | 4.65 |
| | Positive electrode additive | 0.05 | 0.05 | 7 | 7 | 3 | 3 | 3 | 3 |
| | Conductive material | 2 | 2 | 2 | 2 | 2 | 2 | 2 | 2 |
| | Total amount | 6.85 | 21.24 | 13.45 | 26.8 | 5.93 | 51.5 | 9.65 | 9.65 |
| | Viscosity [cps] | 7,000 | 7,000 | 7,000 | 7,000 | 7,000 | 7,000 | 4,000 | 10,000 |
| Second liquid | Second positive electrode active material | 91.15 | 76.76 | 84.55 | 71.2 | 92.07 | 46.5 | 88.35 | 88.35 |
| | Binder | 2 | 2 | 2 | 2 | 2 | 2 | 2 | 2 |
| | Total amount | 93.15 | 78.76 | 86.55 | 73.2 | 94.07 | 48.5 | 90.35 | 90.35 |
| Viscosity [cps] of positive electrode slurry | | 9,500 | 9,500 | 9,500 | 9,500 | 9,500 | 12,000 | 9,500 | 9,500 |

EP 4 156 327 A1

**Comparative Example 9. Preparation of positive electrode slurry**

An N-methylpyrrolidone solvent was introduced into a homo mixer, 93 parts by weight of $LiNi_{0.6}Co_{0.2}Mn_{0.2}O_2$ as a positive electrode active material, 3 parts by weight of $Li_6Co_{0.7}Zn_{0.3}O_4$ as a positive electrode additive, 2 parts by weight of acetylene black and carbon nanotubes (with a weight ratio of 93 to 97:3 to 7) as conductive materials, and 2 parts by weight of PVdF (weight-average molecular weight Mw: 500,000±25,000) as a binder were weighed and added to the homo mixer, and then mixed at 3,000 rpm for 60 minutes to prepare a positive electrode slurry. In this case, the viscosity of the prepared positive electrode slurry at 25 °C was 9,500 cps.

**Experimental Examples**

The positive electrode slurry prepared in each of the examples and comparative examples was applied on one surface of an aluminum current collector, and dried and rolled at 100 °C to manufacture a positive electrode. In this case, the total thickness of a positive electrode mixture layer was 130 $\mu$m, and the total thickness of the manufactured positive electrode was about 200 $\mu$m.

Further, natural graphite and silicon ($SiO_x$, where, $1 \leq x \leq 2$) particles as negative electrode active materials and SBR as a binder were prepared, and a negative electrode slurry was prepared in the same manner as the positive electrode slurry. In this case, the graphite used when a negative electrode mixture layer was manufactured was natural graphite (average particle size: 0.01 to 0.5 $\mu$m), and silicon ($SiO_x$) particles having an average particle size of 0.9 to 1.1 $\mu$m were used. The prepared negative electrode slurry was applied on one surface of a copper current collector, and dried and rolled at 100 °C to manufacture a negative electrode. In this case, the total thickness of a negative electrode mixture layer was 150 $\mu$m, and the total thickness of the manufactured negative electrode was about 250 $\mu$m.

Then, a separator (thickness: about 16 $\mu$m) made of a porous polyethylene (PE) film was interposed between the manufactured positive and negative electrodes, and E2DVC as an electrolyte was added to manufacture a full-cell type cell.

Here, the "E2DVC" is a type of carbonate-based electrolyte, and is a solution obtained by mixing lithium hexafluorophosphate ($LiPF_6$, 1.0M) and vinyl carbonate (VC, 2 wt%) in a mixture of EC:DMC:DEC=1:1:1 (volume ratio).

In order to evaluate performance of the positive electrode additive according to the present technology, experiments described below were performed using a lithium secondary battery cell manufactured as described above.

A) Measurement of amount of oxygen gas generated during charging and discharging

Initial charging (formation) was performed at 55 °C under 3.6 V and 1.0 C conditions on lithium secondary batteries manufactured using the positive electrode slurries of the examples and comparative examples, and while performing the initial charging, gas generated from the positive electrode was degassed and an amount of oxygen gas generated during the initial charging was analyzed. Then, charging and discharging were repeatedly performed 50 times at 45 °C under 0.3 C conditions, and an amount of oxygen gas generated due to electrolyte decomposition during each charging/discharging was further analyzed, and analyzed results are shown in Table 3 below.

B) Measurement of initial resistance

The state of charge (SoC) was adjusted to 50% and then fast discharging was performed on the lithium secondary batteries manufactured using the positive electrode slurries of the examples and comparative examples for 10 seconds to measure the resistance of the secondary batteries, and results of the measurement are shown in Table 3 below.

C) Evaluation of charge/discharge capacity and retention rate of lithium secondary batteries

The lithium secondary batteries manufactured using the positive electrode slurries of the examples and comparative examples were charged at a temperature of 25 °C with a charging current of 0.1 C to a final charging voltage of 4.2 V, and were activated by being charged until a current density reached 0.01 C at the final voltage. Then, the lithium secondary batteries were discharged to a final voltage of 2.5V with a discharge current of 0.1C, and an initial charge/discharge capacity per unit mass was measured.

Then, the charge/discharge capacity was measured while charging and discharging were repeatedly performed 50 times at 45 °C under 0.3 C conditions, and after the charging and discharging were performed 50 times, the charge/discharge capacity retention rate was calculated. Results of the calculation are shown in Table 3 below.

[Table 3]

| | Oxygen gas generation amount [ml/g] | | Battery resistance [Ω] | Initial charge/ discharg e capacity [mAh] | Capacity retention rate [%] after repeated charging and discharging 50 times |
| --- | --- | --- | --- | --- | --- |
| | 1 cycle of charging and discharging | 50 cycles of repeated charging and discharging | | | |
| Example 1 | 89 | 11 | 0.009 | 103.3 | 92.9% |
| Example 2 | 86 | 12 | 0.006 | 103.2 | 92.5% |
| Example 3 | 109 | 10 | 0.013 | 105.1 | 91.4% |
| Example 4 | 106 | 11 | 0.011 | 104.8 | 92.1% |
| Comparative Example 1 | 69 | 12 | 0.007 | 100.7 | 88.3% |
| Comparative Example 2 | 67 | 9 | 0.006 | 100.2 | 88.9% |
| Comparative Example 3 | 129 | 45 | 0.05 | 105.4 | 90.6% |
| Comparative Example 4 | 131 | 32 | 0.04 | 105.1 | 90.2% |
| Comparative Example 5 | 108 | 36 | 0.025 | 102.6 | 90.0% |
| Comparative Example 6 | 112 | 40 | 0.018 | 102.5 | 89.1% |
| Comparative Example 7 | 113 | 37 | 0.14 | 103.3 | 86.9% |
| Comparative Example 8 | 101 | 68 | 0.26 | 102.8 | 86.5% |
| Comparative Example 9 | 99 | 78 | 0.05 | 101.7 | 85.7% |

As shown in Table 3, in the positive electrode slurries according to the present technology, it can be confirmed that the positive electrode additive suppressed loss and/or side reactions of the positive electrode additive during preparation and the positive electrode additive was uniformly dispersed and thus the amount of oxygen gas generated during charging and discharging was low and high capacity and a long lifetime were exhibited.

Specifically, when the positive electrode slurries prepared in the examples were used, it was found that the lithium secondary battery generated 80 to 110 ml/g of oxygen gas in initial charging and discharging, and generated less than 15 ml/g of oxygen gas in subsequent charging and discharging. This means that the positive electrode additive was uniformly dispersed therein when the positive electrode slurry was prepared and that an irreversible reaction proceeded with high efficiency in the slurry during initial charging and discharging.

Further, it was confirmed that the positive electrode slurries prepared in the examples were prepared in a form in which the positive electrode additive was uniformly dispersed therein, and thus had a low electrode surface resistance of 103 Q or less.

In addition, it was confirmed that, when the electrode was manufactured using the positive electrode slurries of the examples, the initial charge/discharge capacity and the capacity retention ratio had high values of 103 mAh or more and 90% or more, respectively. This means that when the positive electrode slurries were prepared, the positive electrode additive in powder form was prevented from being lost in the process of mixing the positive electrode additive or the activity of the positive electrode slurries was prevented from being reduced due to induction of a side reaction with moisture and/or oxygen in the air.

According to the above results, the positive electrode slurry for a lithium secondary battery according to the present technology is composed of a two-liquid type composition, contains the positive electrode additive represented by Chemical Formula 1, which is used as an irreversible additive, in a large amount, and contains a first liquid whose viscosity is adjusted within a specific range (i.e. 5,000-8,000 cps), and thus not only is there an advantage in that the dispersibility and workability of the positive electrode additive are excellent, but also since it is possible to suppress side reactions while minimizing the loss of the positive electrode additive contained in the positive electrode slurry, the state stability of the positive electrode slurry can be improved, and thus the electrical properties of the electrode manufactured using the positive electrode slurry are excellent.

While exemplary embodiments of the present invention and their advantages have been described above in detail, it should be understood by those skilled in the art that various changes, substitutions and alterations may be made herein without departing from the scope of the invention as defined by the following claims.

Therefore, the technical scope of the present invention should not be limited to the contents described in the detailed description of the specification, but should be defined by the appended claims.

**Claims**

1. A positive electrode slurry for a lithium secondary battery comprising a mixture of:

   a first liquid that comprising a first positive electrode active material, a positive electrode additive represented by Chemical Formula 1 below, and a conductive material and has a viscosity of 5,000 cps or more and less than 8,000 cps at 25±1 °C; and
   a second liquid comprising a second positive electrode active material and a binder,
   wherein, the positive electrode slurry has a viscosity of 8,000 cps or more and less than 10,000 cps at 25±1 °C:

   [Chemical Formula 1]     $Li_pCo_{(1-q)}M^1_qO_4$

   wherein in Chemical Formula 1, $M^1$ denotes one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and p and q are $5 \leq p \leq 7$ and $0 \leq q \leq 0.5$, respectively.

2. The positive electrode slurry of claim 1, wherein the viscosity of the positive electrode slurry ranges from 8,500 to 9,700 cps at 25±1 °C.

3. The positive electrode slurry of claim 1, wherein the positive electrode additive has a tetragonal structure with a space group of $P4_2/nmc$.

4. The positive electrode slurry of claim 1, wherein the first liquid comprises 0.5 to 40 parts by weight of the positive electrode additive and 5 to 50 parts by weight of the conductive material with respect to 100 parts by weight of a total amount of the first liquid.

5. The positive electrode slurry of claim 1, wherein the second liquid comprises 1 to 15 parts by weight of the binder with respect to 100 parts by weight of a total amount of the second liquid.

6. The positive electrode slurry of claim 5, wherein the first positive electrode active material is comprised in an amount of 1 to 30 parts by weight with respect to 100 parts by weight of a total amount of the first and second positive electrode active materials.

7. The positive electrode slurry of claim 1, wherein each of the first positive electrode active material and the second positive electrode active material is a lithium metal composite oxide represented by Chemical Formula 2 below:

   [Chemical Formula 2]     $Li_x[Ni_yCo_zMn_wM^2_v]O_u$

   wherein in Chemical Formula 2, $M^2$ denotes one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and x, y, z, w, v, and u are $1.0 \leq x \leq 1.30$, $0 \leq y < 0.95$, $0 < z \leq 0.5$, $0 < w \leq 0.5$, $0 \leq v \leq 0.2$, and $1.5 \leq u \leq 4.5$, respectively.

8. The positive electrode slurry of claim 1, wherein the binder has a weight-average molecular weight (Mw) of 10,000 to 1,000,000.

9. The positive electrode slurry of claim 1, wherein the conductive material comprises one or more materials selected from the group consisting of natural graphite, artificial graphite, carbon black, carbon nanotubes, graphene, acetylene black, Ketjen black, and carbon fibers.

10. The positive electrode slurry of claim 1, wherein each of the first liquid and the second liquid comprises one or more polar aprotic solvents of N-methyl-2pyrrolidone (NMP), N,N-dimethyl acetamide (DMAc), dimethylformamide (DMF), dimethyl sulfoxide (DMSO), acetonitrile (ACN), acetone, ethyl acetate, and distilled water.

11. A method of preparing a positive electrode slurry for a lithium secondary battery, the method comprising:

preparing a first liquid by mixing a first positive electrode active material, a positive electrode additive represented by Chemical Formula 1 below, and a conductive material;
preparing a second liquid by mixing a second positive electrode active material and a binder; and
preparing a positive electrode slurry by mixing the first liquid and the second liquid,
wherein the first liquid has a viscosity of 5,000 cps or more and less than 8,000 cps at $25\pm1$ °C, and
wherein the positive electrode slurry has a viscosity of 8,000 cps or more and less than 10,000 cps at 25:1:1 °C:

[Chemical Formula 1] $\quad\quad Li_pCo_{(1-q)}M^1_qO_4$

wherein in Chemical Formula 1, $M^1$ denotes one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and p and q are $5\leq p\leq7$ and $0\leq q\leq0.5$, respectively.

12. The method of claim 11, wherein the preparing of the first liquid is performed at a temperature condition of 40 °C or lower.

<table>
<tr><td colspan="2">**INTERNATIONAL SEARCH REPORT**</td><td>International application No.<br><br>**PCT/KR2022/006453**</td></tr>
</table>

**A. CLASSIFICATION OF SUBJECT MATTER**

**H01M 4/1391**(2010.01)i; **H01M 4/36**(2006.01)i; **H01M 4/62**(2006.01)i; **H01M 4/525**(2010.01)i; **H01M 4/505**(2010.01)i; **H01M 10/052**(2010.01)i; **H01M 4/02**(2006.01)i

According to International Patent Classification (IPC) or to both national classification and IPC

**B. FIELDS SEARCHED**

Minimum documentation searched (classification system followed by classification symbols)

H01M 4/1391(2010.01); H01M 10/052(2010.01); H01M 10/42(2006.01); H01M 4/13(2010.01); H01M 4/48(2010.01); H01M 4/58(2010.01); H01M 4/583(2010.01); H01M 4/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차전지(lithium secondary battery), 양극(cathode), 점도(viscosity), 첨가제 (additive)

**C. DOCUMENTS CONSIDERED TO BE RELEVANT**

| Category* | Citation of document, with indication, where appropriate, of the relevant passages | Relevant to claim No. |
|---|---|---|
| A | KR 10-2019-0124038 A (LG CHEM, LTD.) 04 November 2019 (2019-11-04)<br>See claims 1 and 6; and paragraphs [0018] and [0039]. | 1-12 |
| A | JP 2018-503946 A (LG CHEM, LTD.) 08 February 2018 (2018-02-08)<br>See claim 1; and paragraph [0073]. | 1-12 |
| A | KR 10-2021-0015141 A (DAEGU GYEONGBUK INSTITUTE OF SCIENCE AND TECHNOLOGY) 10 February 2021 (2021-02-10)<br>See entire document. | 1-12 |
| A | KR 10-1625822 B1 (LG CHEM, LTD.) 31 May 2016 (2016-05-31)<br>See entire document. | 1-12 |
| A | KR 10-2013-0112567 A (KOREA ELECTRONICS TECHNOLOGY INSTITUTE) 14 October 2013 (2013-10-14)<br>See entire document. | 1-12 |

☐ Further documents are listed in the continuation of Box C.      ☑ See patent family annex.

| | |
|---|---|
| *      Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **26 August 2022** | **26 August 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

INTERNATIONAL SEARCH REPORT
Information on patent family members

International application No.

**PCT/KR2022/006453**

| Patent document cited in search report | | | Publication date (day/month/year) | Patent family member(s) | | | Publication date (day/month/year) |
|---|---|---|---|---|---|---|---|
| KR | 10-2019-0124038 | A | 04 November 2019 | KR | 10-2019-0124038 | A | 04 November 2019 |
| JP | 2018-503946 | A | 08 February 2018 | CN | 107112524 | A | 29 August 2017 |
| | | | | CN | 107112524 | B | 28 April 2020 |
| | | | | JP | 6517344 | B2 | 22 May 2019 |
| | | | | KR | 10-1773698 | B1 | 31 August 2017 |
| | | | | KR | 10-2016-0087353 | A | 21 July 2016 |
| | | | | US | 10290859 | B2 | 14 May 2019 |
| | | | | US | 2017-0338468 | A1 | 23 November 2017 |
| | | | | WO | 2016-114589 | A1 | 21 July 2016 |
| KR | 10-2021-0015141 | A | 10 February 2021 | | None | | |
| KR | 10-1625822 | B1 | 31 May 2016 | CN | 105247715 | A | 13 January 2016 |
| | | | | CN | 105247715 | B | 09 April 2019 |
| | | | | JP | 2016-518012 | A | 20 June 2016 |
| | | | | JP | 6254258 | B2 | 27 December 2017 |
| | | | | KR | 10-2015-0014878 | A | 09 February 2015 |
| | | | | US | 10218002 | B2 | 26 February 2019 |
| | | | | US | 2016-0133933 | A1 | 12 May 2016 |
| | | | | WO | 2015-016548 | A1 | 05 February 2015 |
| KR | 10-2013-0112567 | A | 14 October 2013 | KR | 10-1383360 | B1 | 14 April 2014 |
| | | | | WO | 2013-151209 | A1 | 10 October 2013 |

Form PCT/ISA/210 (patent family annex) (July 2019)

**EP 4 156 327 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210067112

- KR 1020190064423